# EUROPEAN PATENT APPLICATION

(11) **EP 4 261 758 A1**
(43) Date of publication of application: **18.10.2023**
(21) Application number: 23167645.3
(22) Date of filing: 12.04.2023
(51) Int. Cl.: G06Q 10/0635, G06Q 10/0639

(54) **COMPUTER METHOD AND SYSTEM FOR INTELLIGENCE GATHERING**

(30) Priority: 13.04.2022 US 202263330685 P
(71) Applicant: Magnet Forensics Inc., Waterloo, ON N2K 0A8 (CA)
(72) Inventor: SALIBA, Jad John, Waterloo, Ontario N2K 0A8 (CA); MCQUAID, Jamie, Waterloo, Ontario N2K 0A8 (CA); AMICK, Harold C., Waterloo, Ontario N2K 0A8 (CA)
(74) Representative: Humphrey-Evans, Edward John

(57) **Abstract**

A system and associated method for intelligence gathering is provided. The system includes a forensic data source, an investigation module, and a report generation module. The investigation module is configured to collect subject data of a subject from the forensic data source and transmit subject data to the report generation module. The report generation module is configured to receive the subject data from the investigation module and analyze subject data to generate an investigation report output.

## Description

### Technical Field

The following relates generally to electronic intelligence gathering systems and methods, and more particularly to systems and methods for gathering intelligence by collecting and analyzing subject data from a forensic data source.

### Background to the invention

Insider threats may be defined as individuals associated with an entity which may harm the entity. For example, an employee of a corporation may be planning on severing ties with the corporation. It is common for such employees to collect data from employer devices that they believe may be useful for the employee in future roles, possibly at competitor employers. Such data collection may be harmful to the employer.

In other examples, insider threats may be employees who joined an employer for the express purpose of exfiltrating valuable data.

Currently, it may be difficult to detect insider threats. Employees may inherently require access to sensitive corporate data to perform their day-to-day employment activities. Similarly, some employees, depending on their role, may need to remove sensitive corporate data from internal systems and networks, and transfer such data to other external data during their day-to-day activities.

When employees leave an organization, the organization may conduct investigations to determine whether sensitive corporate data has been exfiltrated and may take steps in response to limit possible damage stemming from the data exfiltration. For example, the organization may gather intelligence and conduct an investigation to detect signs of data exfiltration and other improper ex-employee behavior.

Such investigations may be time consuming, as an employee may be associated with a large amount of data which may need to be manually reviewed. Additionally, such an investigation may be preferably conducted by a skilled investigator, to minimize investigation time and maximize investigation effectiveness. It may be advantageous to enable a wider variety of individuals to effectively conduct such investigations.

Accordingly, there is a need for an improved computer system and method for assisting in intelligence gathering that overcome the disadvantages of existing systems and methods.

### Summary

Described herein is an intelligence gathering system, the system comprising a forensic data source, an investigation module, and a report generation module, the investigation module configured to collect subject data of a subject from the forensic data source, and transmit subject data to the report generation module, wherein the report generation module is configured to receive the subject data from the investigation module and analyze subject data to generate an investigation report output.

According to some embodiments, the investigation report output comprises investigation flag data.

According to some embodiments, the system further comprises a searching module, wherein the searching module is configured to receive a keyword string data as input from an investigator terminal, and the subject data from the investigation module, and output a search report.

According to some embodiments, the searching module applies a machine learning model, wherein the model receives the keyword string data and the subject data as an input, and outputs search report data to the searching module.

According to some embodiments, the subject comprises a subject class, and the report generation module analyzes subject data according to the subject class.

According to some embodiments, the subject comprises a subject class. According to some embodiments, the forensic data source is an employee computer. According to some embodiments, wherein the forensic data source is an employee mobile device. According to some embodiments, investigation flag data comprises file path data, browser history entries, or employee calendar entries.

Described herein is an intelligence gathering method, the method comprising collecting subject data of a subject from a forensic data source, providing the subject data to a report generation module and analyzing the subject data using the report generation module to generate an investigation report output comprising investigation flags.

According to some embodiments, the subject comprises a subject class, and analyzing subject data comprises inputting subject data and subject class into a machine learning model. According to some embodiments, the method further comprises providing a keyword search string to a searching module, providing collected subject data to searching module, and generating a search report using searching module. According to some embodiments, the searching module comprises a machine learning model.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of an intelligence gathering system, according to an embodiment;
Figure 2 is a block diagram of a computing device for use in an intelligence gathering system, according to an embodiment;
Figure 3 is a block diagram of an intelligence gathering system, according to an embodiment;
Figure 4 is a block diagram of an intelligence gathering system, according to an embodiment;
Figure 5 is a block diagram of an intelligence gathering system, according to an embodiment;
Figure 6 is a block diagram of a report generation module of an intelligence gathering system, according to an embodiment;
Figure 7 is a block diagram of a searching module of an intelligence gathering system, according to an embodiment;
Figure 8 is a block diagram of an electronic investigation report generated by an intelligence gathering system, according to an embodiment;
Figure 9 is a block diagram of an electronic search report generated by an intelligence gathering system, according to an embodiment;
Figure 10 is a block diagram of an intelligence gathering system, according to an embodiment;
Figure 11 is a flow chart of an intelligence gathering method, according to an embodiment; and
Figure 12 is a flow chart of an intelligence gathering method, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to methods and systems for gathering intelligence, and more particularly to methods and systems for collecting and analyzing subject data to generate an investigation report.

Employees or subjects may inflict harm on their employers or superiors by exfiltrating valuable information. Employers may wish to limit the damage of the exfiltration of highly sensitive corporate information by employees who have left the employer, and therefore, do not have aligned interests with their employer.

Once employees have severed ties with an employer, the employer may retain full access to employee devices, such as employer issued mobile phones, laptop computers, tablets and more. Similarly, the employer may retain full access to other employee data, which may be stored on an employer server, or employer managed cloud server, such as email and meeting record data. Such data sources may comprise evidence of data exfiltration in some examples.

Often, in situations wherein there exists a suspicion of data exfiltration, an employer may conduct an investigation to determine whether data has been exfiltrated by an employee before leaving the organization. This investigation process may comprise providing the contents of an employee device data storage device (e.g. laptop hard drive) to an investigator, for analysis. The investigator, through the application of skill and judgment, may search for evidence of sensitive data exfiltration, and other inappropriate, harmful or illegal conduct.

Such an [manual] investigation may be time consuming. Modern employee devices may comprise a large storage disk, with large amounts of irrelevant files that must be filtered through. Data exfiltration may give rise to corporate risks. There is an interest in identifying data exfiltration as soon as possible, such that appropriate counter measures may be taken quickly, such as by safeguarding related data, initiating legal proceedings, or contacting law enforcement personnel. Additionally, it may be advantageous to enable a relatively unskilled investigator to conduct an investigation, to reduce costs and increase speed and scalability of investigations.

Provided herein are systems and methods for electronic intelligence gathering. Instead of manually analyzing employee devices, an automated system and method may be employed. An investigator may be provided with an employee device, such as a hard drive. The contents of the hard drive may be read by an investigation module, which may collect subject data from the device. The subject data may be passed to a report generation module. The report generation module may analyze the subject data and generate an electronic/digital investigation report. The investigation report may be provided to a human investigator, assisting the investigator in a subsequent investigation. For example, the system may display the electronic investigation report, of a subset of the data thereof, in a user interface in human-readable format for review by the investigator user.

Similarly, collected subject data may be provided to a searching module from an investigation module, along with a search string or keyword, which may be generated by an investigator. The searching module may generate a search report. The search report may include subject data or references of subject data containing or associated with the provided search string or keyword. Many search reports, each generated using different keyword or string data, may be used by an investigator during an investigation.

The investigator may use both the investigation report and search reports when commencing an investigation. These reports may provide an investigator with appropriate investigation starting points, comprising likely suspicious subject data references, enabling an investigator to more quickly and thoroughly conduct an investigation. Similarly, less experienced investigators may require less training to conduct an investigation with the assistance of the systems and methods described herein.

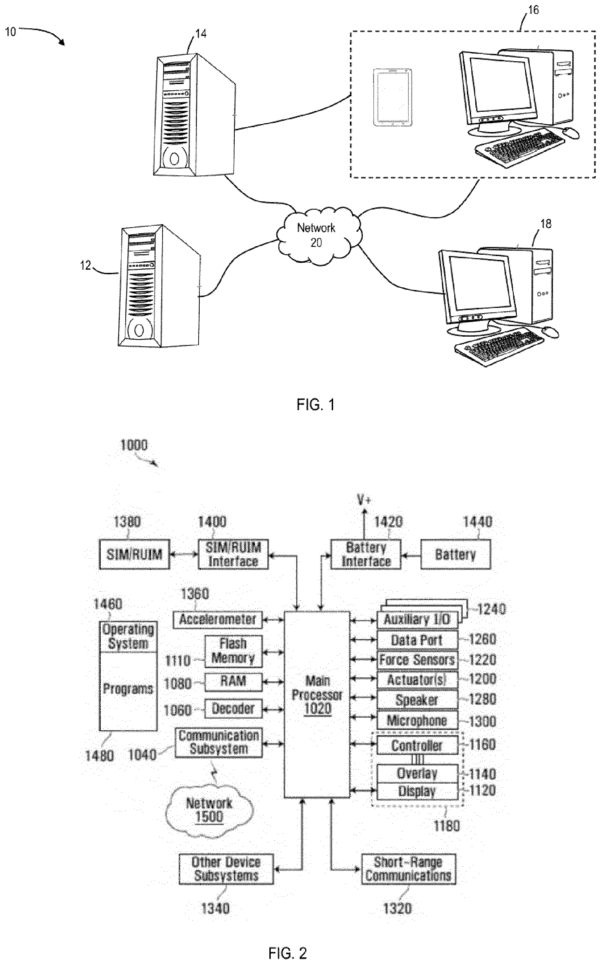

Referring first to Figure 1, shown therein is a block diagram illustrating an intelligence gathering system 10, in accordance with an embodiment. The system 10 includes an investigation server platform 12 which communicates with an investigation device 14, a plurality of forensic data sources 16, and an investigator terminal 18 via a network 20.

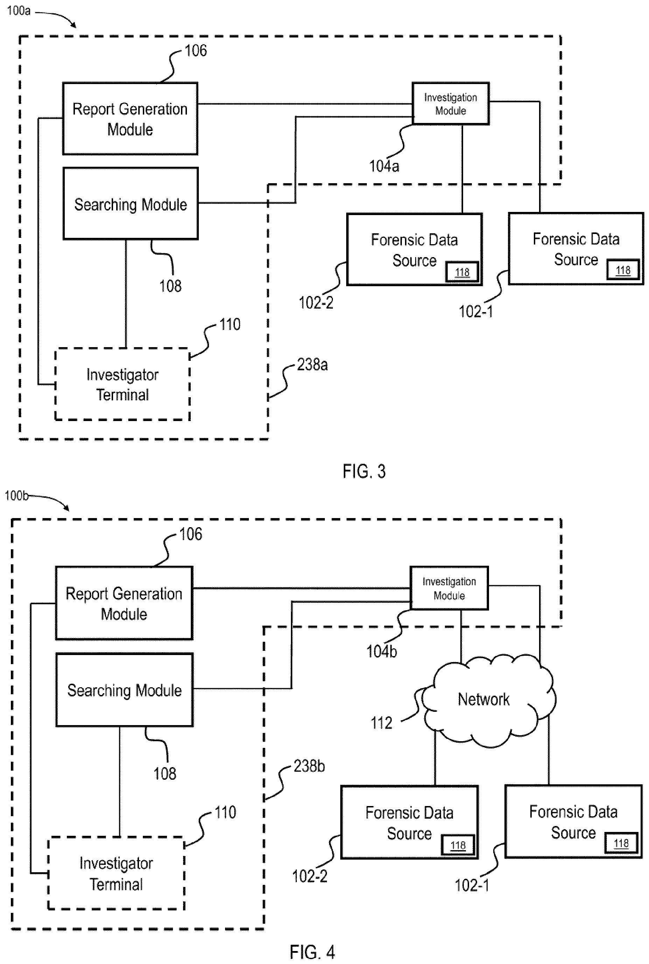

The investigation server platform 12 may be a purpose-built machine designed specifically for detecting insider threats based on subject data collected from forensic data sources 16 linked to a subject. The server platform 12 may be configured to control and execute a report generation module and searching module, such as report generation module 106 and searching module 108 of Figure 3, for gathering intelligence of a subject based on subject data collected from forensic data sources 16 via investigation devices 14.

Investigation devices 14 may include a data collection module, such as investigation module 104 of Figure 3, for collecting the subject data from the forensic data sources 16. The output of the investigation server platform 12 may be communicated via network 20 to the investigator terminal 18 for presentation to an operator. In some examples of system 10, investigation server platform 12, investigation devices 14 and investigator terminal may comprise a single device.

The server platform 12, investigation devices 14, forensic data sources 16, and investigatorterminal 18 may be a server computer, desktop computer, notebook computer, tablet, PDA, smartphone, or another computing device. The devices 12, 14, 16, 18, may include a connection with the network 20 such as a wired or wireless connection to the Internet. In some cases, the network 20 may include other types of computer or telecommunication networks. The devices 12, 14, 16, 18 may include one or more of a memory, a secondary storage device, a processor, an input device, a display device, and an output device. Memory may include random access memory (RAM) or similar types of memory. Also, memory may store one or more applications for execution by processor. Applications may correspond with software modules comprising computer executable instructions to perform processing for the functions described below. Secondary storage device may include a hard disk drive, floppy disk drive, CD drive, DVD drive, Blu-ray drive, or other types of non-volatile data storage. Processor may execute applications, computer readable instructions or programs. The applications, computer readable instructions or programs may be stored in memory or in secondary storage, or may be received from the Internet or other network 20. Input device may include any device for entering information into device 12, 14, 16, 18. For example, input device may be a keyboard, key pad, cursor-control device, touch-screen, camera, or microphone. Display device may include any type of device for presenting visual information. For example, display device may be a computer monitor, a flat-screen display, a projector or a display panel. Output device may include any type of device for presenting a hard copy of information, such as a printer for example. Output device may also include other types of output devices such as speakers, for example. In some cases, device 12, 14, 16, 18 may include multiple of any one or more of processors, applications, software modules, second storage devices, network connections, input devices, output devices, and display devices.

Although devices 12, 14, 16, 18 are described with various components, one skilled in the art will appreciate that the devices 12, 14, 16, 18 may in some cases contain fewer, additional or different components. In addition, although aspects of an implementation of the devices 12, 14, 16, 18 may be described as being stored in memory, one skilled in the art will appreciate that these aspects can also be stored on or read from other types of computer program products or computer-readable media, such as secondary storage devices, including hard disks, floppy disks, CDs, or DVDs; a carrier wave from the Internet or other network; or other forms of RAM or ROM. The computer-readable media may include instructions for controlling the devices 12, 14, 16, 18 and/or processor to perform a particular method.

In the description that follows, devices such as server platform 12, investigation devices 14, forensic data sources 16, investigator terminal 18, are described performing certain acts. It will be appreciated that any one or more of these devices may perform an act automatically or in response to an interaction by a user of that device. That is, the user of the device may manipulate one or more input devices (e.g. a touchscreen, a mouse, or a button) causing the device to perform the described act. In many cases, this aspect may not be described below, but it will be understood.

As an example, it is described below that the devices 12, 14, 16, 18 may send information to the server platform 12. For example, an investigator user using the investigator terminal 18 may manipulate one or more input devices (e.g. a mouse and a keyboard) to interact with a user interface displayed on a display of the investigator terminal 18. Generally, the device may receive a user interface from the network 20 (e.g. in the form of a webpage). Alternatively, or in addition, a user interface may be stored locally at a device (e.g. a cache of a webpage or a mobile application).

Server platform 12 may be configured to receive a plurality of information, from each of the plurality of investigation devices 14, forensic data sources 16, and investigator device 18. Generally, the information may comprise at least an identifier identifying the device or user. For example, the information may comprise one or more of a username, e-mail address, password, or social media handle.

In response to receiving information, the server platform 12 may store the information in storage database. The storage may correspond with secondary storage of the device 12, 14, 16, 18. Generally, the storage database may be any suitable storage device such as a hard disk drive, a solid state drive, a memory card, or a disk (e.g. CD, DVD, or Blu-ray etc.). Also, the storage database may be locally connected with server platform 12. In some cases, storage database may be located remotely from server platform 12 and accessible to server platform 12 across a network for example. In some cases, storage database may comprise one or more storage devices located at a networked cloud storage provider.

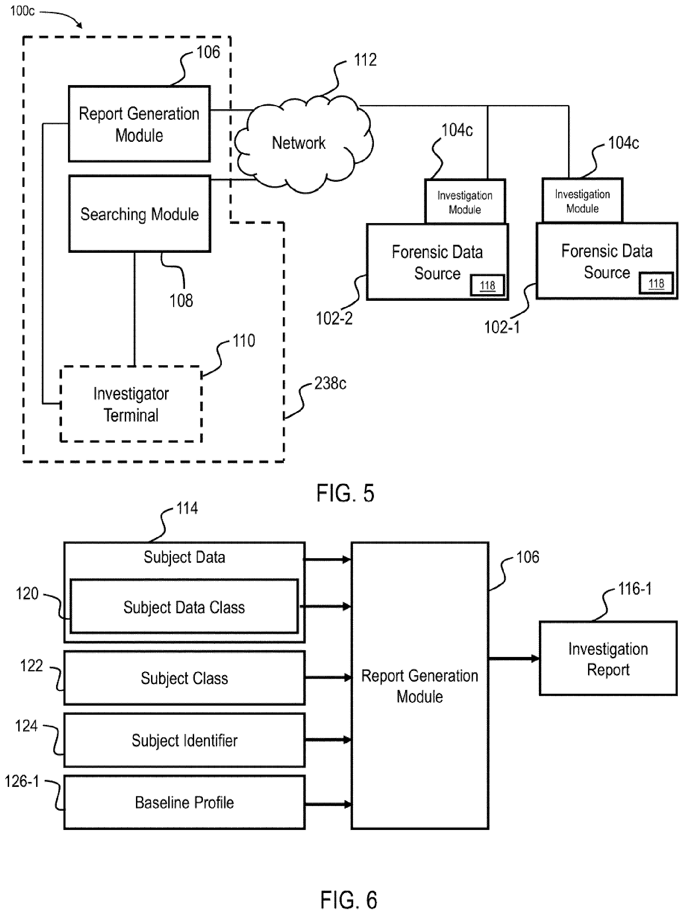

The forensic data source 16 may be associated with a threat subject account, or subject identifier, such as subject identifier 124, or forensic data source class 118 of Figure 6. Any suitable mechanism for associating a device with an account is expressly contemplated. In some cases, a device may be associated with an account by sending credentials (e.g. a cookie, login, or password etc.) to the server platform 12. The server platform 12 may verify the credentials (e.g. determine that the received password matches a password associated with the account). If a device is associated with an account, the server platform 12 may consider further acts by that device to be associated with that account.

Referring now to Figure 2, Figure 2 shows a simplified block diagram of components of a computing device 1000, such as a mobile device or portable electronic device, according to an embodiment. Software modules described in the disclosure herein may be configured to run on a computing device, such as device 1000 of Figure 2. The device 1000 includes multiple components such as a processor 1020 that controls the operations of the device 1000. Communication functions, including data communications, voice communications, or both may be performed through a communication subsystem 1040. Data received by the device 1000 may be decompressed and decrypted by a decoder 1060. The communication subsystem 1040 may receive messages from and send messages to a wireless network 1500.

The wireless network 1500 may be any type of wireless network, including, but not limited to, data-centric wireless networks, voice-centric wireless networks, and dual-mode networks that support both voice and data communications. The device 1000 may be a battery-powered device and as shown includes a battery interface 1420 for receiving one or more rechargeable batteries 1440. The processor 1020 also interacts with additional subsystems such as a Random Access Memory (RAM) 1080, a flash memory 1100, a display 1120 (e.g. with a touch-sensitive overlay 1140 connected to an electronic controller 1160 that together comprise a touch-sensitive display 1180), an actuator assembly 1200, one or more optional force sensors 1220, an auxiliary input/output (I/O) subsystem 1240, a data port 1260, a speaker 1280, a microphone 1300, short-range communications systems 1320 and other device subsystems 1340.

In some embodiments, user-interaction with the graphical user interface may be performed through the touch-sensitive overlay 1140. The processor 1020 may interact with the touch-sensitive overlay 1140 via the electronic controller 1160. Information, such as text, characters, symbols, images, icons, and other items that may be displayed or rendered on a portable electronic device generated by the processor 102 may be displayed on the touch-sensitive display 118. The processor 1020 may also interact with an accelerometer 1360 as shown in Figure 2. The accelerometer 1360 may be utilized for detecting direction of gravitational forces or gravity-induced reaction forces.

To identify a subscriber for network access according to the present embodiment, the device 1000 may use a Subscriber Identity Module or a Removable User Identity Module (SIM/RUIM) card 1380 inserted into a SIM/RUIM interface 1400 for communication with a network (such as the wireless network 1500). Alternatively, user identification information may be programmed into the flash memory 1100 or performed using other techniques.

The device 1000 also includes an operating system 1460 and software components 1480 that are executed by the processor 1020 and which may be stored in a persistent data storage device such as the flash memory 1100. Additional applications may be loaded onto the device 1000 through the wireless network 1500, the auxiliary I/O subsystem 1240, the data port 1260, the short-range communications subsystem 1320, or any other suitable device subsystem 1340.

For example, in use, a received signal such as a text message, an e-mail message, web page download, or other data may be processed by the communication subsystem 1040 and input to the processor 1020. The processor 1020 then processes the received signal for output to the display 1120 or alternatively to the auxiliary I/O subsystem 1240. A subscriber may also compose data items, such as e-mail messages, for example, which may be transmitted over the wireless network 1500 through the communication subsystem 1040. For voice communications, the overall operation of the portable electronic device 1000 may be similar. The speaker 1280 may output audible information converted from electrical signals, and the microphone 1300 may convert audible information into electrical signals for processing.

Referring now to Figures 3, 4 and 5, pictured therein are system block diagrams of systems, each Figure depicting a variation of an intelligence gathering systems 100a, 100b, 100c, according to an embodiment. Systems 100a, 100b, 100c may be referred to generically as system 100. System 100 may correspond to system 10 described above in reference to Figure 1.

System 100 may comprise forensic data sources 102, report generation module 106 and searching module 108. Report generation module 106 and searching module 108 may be implemented by investigation server platform 12 of Figure 1, investigation modules 104a, 104b, 104c may be implemented by investigation devices 14 of Figure 1, investigator terminal 110 may correspond to investigator terminal 18 of Figure 1 and forensic data sources 102-1, 102-2 (referred to generically as forensic data source 102) may correspond to forensic data sources 16 of Figure 1. In reference to system 100, employees may be referred to as subjects, and data or information relating to an employee may be referred to as subject data (e.g. subject data 114 in Figure 6). In some examples, subject data 114 may be referred to as artifact data.

The system 100 includes a plurality of forensic data sources, such as 102-1, and 102-2. Forensic data sources 102-1, 102-2, may be referred to collectively as forensic data sources 102 and generically as forensic data source 102. Each forensic data source 102 may comprise an employer issued or owned productivity device, such as a desktop PC, laptop PC, smartphone, tablet, smartwatch, or other device. Generally, the forensic data source 102 includes storage media for storing electronic information (electronically stored information). Forensic data sources 102 may comprise employer hardware servers, email servers, cloud servers, databases, data lakes or other data sources, which may store information or data that may be linked to an electronic representation of an employee and/ or subject (e.g. unique employee identifier such as a subject identifier 124, as shown in Figure 6). Forensic data sources 102 may include other data sources, such as surveillance camera storage devices or building access record storage devices.

Forensic data sources 102 may include a forensic data source class 118. The forensic data source class 118 may be a unique identifier that associates a specific forensic data source 102 with a broad category of forensic data sources. Forensic data source classes may include, for example, laptop PC, desktop PC, smartphone, tablet, smartwatch, employer hardware server, cloud server, database, surveillance camera storage devices, facility access record storage devices (e.g. building access, parking facility access), or other classes.

Subject data 114 may take on a plurality of forms. As previously described, forensic data sources 102 may comprise a variety of devices, such as subject laptop computers, subject mobile phones, employer servers, building access records and more. In general, subject data 114 may be characterized as data relevant to a subject's employment activities, or artifact / metadata type subject data which is more likely to comprise sensitive data, such as emails, instant messages, HR reports and building access data.

Subject data 114 that may be found on a subject laptop may include the entire contents of the storage drive. More specifically, subject data of a subject laptop that may be of particular interest may include, without limitation, installed applications, application installation logs, browser history, calendar entries, email records, file transfer logs, peripheral device attachment logs, screenshot records, instant messenger logs, and videoconferencing logs. Subject data 114 that may be found on a subject mobile phone may include, without limitation: installed mobile apps, mobile app installation logs, mobile browser history, mobile calendar entries, mobile email records, mobile download logs, Bluetooth device logs, screenshot records, instant messenger logs, and videoconferencing logs. Subject data 114 that may be found on an employer server may include, without limitation: employee emails, employee calendars, human resources records, employee complaint records, vacation day logs, time off logs, and more. Subject data 114 that may be found within building access records may include, without limitation: time of building entry for each employee, time of building exit for each employee, time of elevator access for each employee, restricted area entry/exit, etc.

Subject data 114 may also include a subject data class 120, to broadly or specifically subcategorize subject data. For example, employee laptop browser history data may belong to a browser history class. In some examples, depending on system configuration, described subject data may be located on other forensic data sources, or forensic data sources that are not described herein, but may be analogous to forensic data sources described in the present disclosure.

Each subject data class 120 may include a specific structure and may be evaluated in a specific manner. For example, the browser history data class may be evaluated against a browser history blacklist (for example, job searching websites), while employee email data may be evaluated based on whether emails with attachments have been sent to uncommon domains, non-organizational domains (for example, Gmail domains), or contain attachments with a file size over a threshold size.

System 100 of Figure 3, 4, and 5 further includes an investigation module 104a, 104b, 104c (collectively or generically referred to as investigation module 104 or investigation modules 104). Investigation modules 104 are configurable to be coupled to forensic data sources 102. Investigation modules 104 are configured to read data storage devices of forensic data sources (e.g. hard disk drives or solid state disks of a laptop computer, NAND flash storage of a mobile phone etc.) and collect subject data 114 from forensic data sources 102.

Investigation modules 104 may be configured to collect a plurality of types of subject data 114 from forensic data sources, depending on their configuration. In some examples, the investigation module 104 may execute a low-level block-based data copy operation from a forensic data source storage media, to retrieve all data on the device, regardless of whether attempts have been made to delete the data. Investigation module 104 may simply copy files and folders using operating system-level file copy facilities. Other data retrieval techniques may also be used, as will be known. Specific techniques for forensic data retrieval from a target device or forensic data source will be known.

The investigation module may comprise a number of forms, or a plurality of investigation modules 104. For example, system 100 may include one or more local investigation modules 104a, one or more network investigation modules 104b (e.g. as shown in the embodiment of Figure 4), wherein each network investigation module 104b is operable to couple to at least one forensic data source 102 through a network 112, or the system 100 may include one or more installed investigation module 104c (e.g. as shown in the embodiment of Figure 5), each including a software module installed on a forensic data source for execution on the forensic data source.

Network 112 may include a private network, such as internal employer network, or a public network, such as the Internet. When communications of sensitive data are transmitted over a public network, such as the internet, an encryption scheme may be applied, such that the data may not be accessed if intercepted during transmission. Network 112 may correspond to network 20 of Figure 1.

Network investigation modules 104b may communicate with forensic data sources 102, through network 112, to access subject data from forensic data sources 102. Network investigation modules 104b may be provided read access to forensic data sources 102 over network 112, such that network investigation modules 104b can scrape forensic data sources for, and collect, subject data 114. In some examples, systems may only comprise installed investigation modules 104c, network investigation modules 104b or local investigation modules 104a, depending on system configuration.

In some examples, network investigation modules 104b may be provided through a software as a service (SaaS) type framework or may be delivered from a cloud server. For example, an entity, such as an employer may wish to utilize the systems and methods described herein. The employer may subscribe to a service providing for the system described herein, and provide read access to the service, such that a network investigation module 104b may collect subject data 114 from forensic data sources.

Investigation modules 104 may be coupled to an external server, device (e.g. investigator terminal 110), or controller for configuration. For example, in examples wherein investigation modules 104 are provided through a SaaS framework, each module may be altered or reconfigured to adjust parameters of investigation, such as data collection. In examples comprising local investigation modules 104a, each local investigation module 104a may be in communication with an external controller (e.g. investigator terminal 110), which may periodically, or continuously reconfigure the investigation module 104a, to adjust parameters of investigation, such as data collection.

Once investigation modules 104a, 104b, 104c collect subject data, subject data may be transmitted to report generation module 106, and or searching module 108.

Referring now to Figure 6, shown therein is a depiction of the report generation module 106 of Figures 3,4 and 5 in more detail, according to an embodiment. Report generation module 106 may include a software module configured to receive a plurality of inputs, including subject identifier 124 (e.g. employee ID number), subject data 114, subject data class 120 associated with received subject data 114, subject class 122 (e.g. employment position), and output an investigation report 116-1.

The report generation module 106 may process subject data 114 according to subject identifier 124, subject data class 120, baseline profile 126-1, and subject class 122. In some examples, report generation module 106 may be configured to preprocess input data into a format amenable to the creation of an investigation report 116. In some examples, report generation module 106 may be configured to receive an input comprising subject data of a different format than described herein. Report generation module 106 may be configured to run on any general-purpose computer processor. In some examples, report generation module 106 may be executed on a purpose-built report generation device comprising a processor, memory, and network interface.

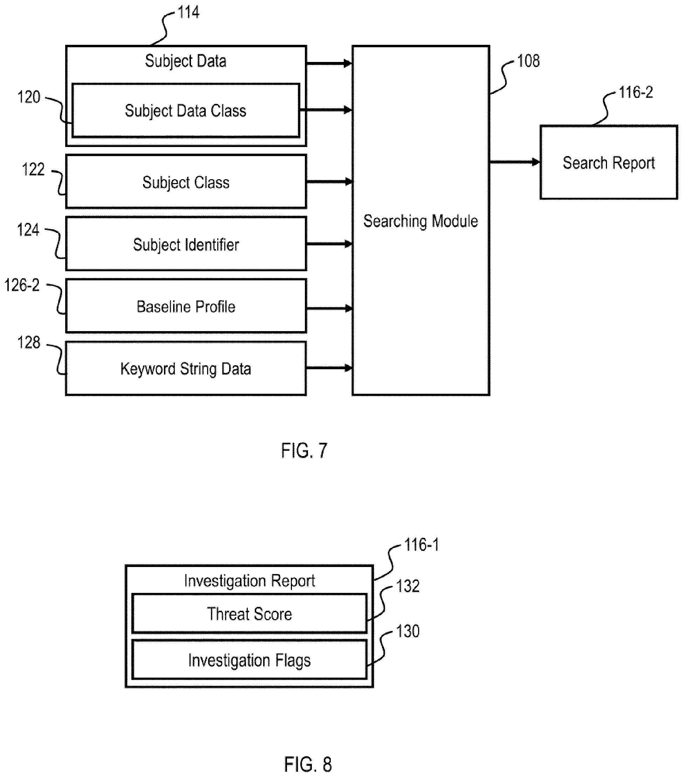

The report generation module 106 may generate the investigation report 116-1 through the application of a machine learning model. In some examples, the machine learning model may comprise a neural network. The neural network may include an input layer, one or more hidden layers, and an output layer, configured to receive one or more data inputs at the input layer. Inputs at the input layer may include inputs as described in Figure 6, including subject data 114, subject class 122, subject identifier 124 and baseline profile 126-1. The neural network may generate an output at the output layer. The output may include a class label and a confidence level. In some examples, the neural network may act as a binary classifier, and may assign one of two threat classes to the subject (e.g. threat, no threat) as the threat score 132 of Figure 8. In another example the neural network may comprise three or more possible classes with each class corresponding to a threat level of the subject (e.g. none, low, medium, or high). The neural network may assign the subject to one of the three or more classes, which may be reflected in threat score 132 of Figure 8. In some examples, the output layer includes a softmax activation function for representing categorical distribution over class labels.

In some examples, the machine learning model applied by report generation module 106 may comprise a model configured for regression, for example, a gradient boosting based model such as XGBoost. In such examples, the threat prediction module 106 may be trained with historical subject data of known insider threats (e.g. through the application of a baseline profile 126-1).

In some examples, the machine learning model applied by report generation module 106 may be configured for continuous learning / continuous training, such that as more training data becomes available to report generation module 106, the machine learning model applied by report generation module 106 may continuously be trained to improve the performance of the model.

In some examples, the report generation module 106 may produce the investigation report 116-1 through the application of a set of pre-programmed rules. For example, some subject data 114 may be determined by the report generation module 106 to exist on a blacklist accessible to the report generation module 106, wherein the existence of such subject data on a forensic data source may be suspicious. A point system may be applied by report generation module 106.

In some examples, the report generation module 106 may generate the investigation report 116-1 through the application of a combination of a set of pre-programmed rules and machine learning models. For example, the report generation module 106 may apply a two-tiered analysis, wherein input data is first run through a trained machine learning model, and the output of the model is then subsequently subjected to a set of pre-programmed rules to calculate a threat score (e.g. threat score 132 of Figure 8).

In some examples, report generation module 106 may generate an investigation report 116-1 according to a baseline profile 126-1, generated for a subject (e.g. of a unique subject identifier), subject class 122, or other definable group. Baseline profiles may comprise an individual baseline profile, or a collective baseline profile. For example, for a given subject class 122, report generation module 106 may build a collective baseline profile 126-1 of a number of subjects of the given subject class, such that report generation module 106 may compare the collected subject data 114 of a given subject belonging to a given subject class against the mean or median subject of their subject class (intended to represent a range of "normal activity" for someone in the subject class). If a subject's data includes subject data 114 that meaningfully deviates from the baseline profile of their subject class, such as by meaningfully deviating from a mean or median subject of the subject class, report generation module 106 may generate an investigation report 116-1 identifying the subject as a threat, according to a high threat score 132, and may flag deviating subject data by including references to such deviating subject data within investigation flags 130 of investigation report 116-1.

In some examples, a baseline profile 126-1 may be built per organization. Such a baseline profile may comprise a collective baseline profile. Subjects of a given subject class, or all subjects within an organization may regularly perform certain activities. Subject data 114 for all such subjects may be collected to build a baseline profile 126-1 for a given organization. This baseline profile 126-1 may be updated continuously or regularly (e.g. once per month or once per year).

In some examples, report generation module 106 may be provided through a software as a service (SaaS) type framework, and/or be delivered from a cloud server. For example, an entity, such as an employer may wish to utilize the systems and methods described herein. The employer may configure their internal systems such that the report generation module 106, delivered as a SaaS, from a cloud server, is provided collected subject data 114 from forensic data sources 102.

In some examples, baseline profiles 126-1 may be generated from subject data 114 collected from a plurality of organizations, for the application to a subject within one organization. In such examples, the collected data may be anonymized before storage and processing, to minimize the risk of sensitive data breaches.

Report generation module 106 may be coupled to an external server (e.g. investigator terminal 110), device, or controller for configuration. For example, in examples wherein report generation module 106 is provided through a SaaS framework, the module 106 may be altered or reconfigured to adjust parameters of investigation report 116-1 generation.

Referring now to Figure 8, pictured therein is a block diagram depicting an investigation report 116-1, according to an embodiment. The investigation report 116-1 comprises highlighting areas of interest located within collected subject data 114. Investigation report 116-1 may comprise a threat score 132 and investigation flags 130.

Investigation flags 130 may comprise a plurality of references to collected subject data 114, wherein each piece of referred to subject data 114 may comprise a single investigation flag, pointing to evidence of suspicious activity. For example, in an embodiment, subject data 114 may comprise the contents of a laptop storage drive, such as a solid state disk (SSD). In some examples, the investigation flags 130 may be ranked. For example, associated with each investigation flag, may be a threat score or coefficient, such that each investigation flag may be evaluated versus every other investigation flag 130. Investigation report 116-1 is intended to be reviewed and actioned by a skilled human investigator. It may be preferable for the investigation report 116-1 to comprise investigation flag data including investigation flags of relatively low suspicion i.e., overinclusive investigation flag data may advantageous. Report generation module 106 may be configured to generate investigation flag 130 data associated with subject data 114 that may only be nominally suspicious.

In some examples, threat score 132 may include a single numerical threat score 132, wherein a greater threat score 132 may correspond to an elevated risk of a subject comprising an insider threat. For example, threat score 132 may quantify the risk of a subject comprising an insider threat out of 100. In other examples, threat score 132 may comprise a binary determination of threat level, wherein a value of "1" corresponds to a suspected insider threat, while a value of "0" corresponds to a non-insider threat.

In other examples, threat score 132 may comprise a categorical score. For example, in an embodiment, a threat score 132 may be assigned from a fixed set of categories consisting of: none, low, medium, or high. In some examples, a categorical threat score may be determined by converting a numerical threat score to a categorical threat score, wherein each threat category corresponds to a range of possible numerical threat score values.

In some examples, report generation module 106 may apply a weighting matrix to processed subject data 114, such that various pieces of subject data provide a weighted contribution to a final threat score 132 determination. In some examples, the data which is the subject of investigation flags 130 may be ranked and displayed according to weights associated with subject data in a weighting matrix.

In some examples, investigation report 116-1 may not comprise a threat score 132. In such examples, investigation report 116-1 may comprise only investigation flags 130, which may be reviewed by a human investigator to determine appropriate next steps.

In some examples, threat scores 132 may be computed such that only combinations of certain subject data 114 result in high threat level rankings, and not the same subject data alone. For example, subject data 114 comprising either example data "A" or example data "B" alone may not result in an investigation report 116-1 comprising a high threat score 132, however, subject data 114 comprising both example data "A" and example data "B" may result in an investigation report 116-1 comprising a high threat score 132.

Referring now to Figure 7, shown therein is a depiction of the searching module 108 of Figures 3,4 and 5 in more detail, according to an embodiment.

Searching module 108 may include a software module configured to receive a plurality of inputs, including subject identifier 124 (e.g. employee ID number), subject data 114, subject data class 120 associated with received subject data 114, subject class 122 (e.g. employment position) and keyword string data 128, and output a search report 116-2. The searching module 108 may process subject data 114 according to subject identifier 124, subject data class 120, baseline profile 126-2, keyword string data 128 and subject class 122. In some examples, searching module 108 may be configured to preprocess input data into a format amenable to the creation of a search report 116-2. In some examples, searching module 108 may be configured to receive an input comprising subject data 114 of a different format than described herein. Searching module 108 may be configured to run on any general-purpose computer processor. In some examples, searching module 108 may be executed on a purpose-built report generation device comprising a processor, memory, and network interface.

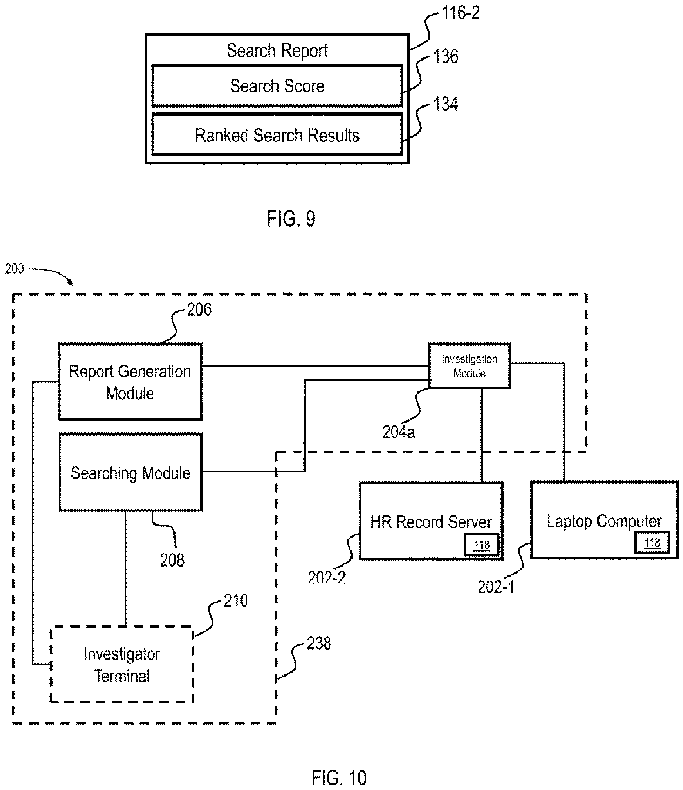

Referring now to Figure 9, pictured therein is a block diagram depicting a search report 116-2, according to an embodiment. The search report 116-2 comprises highlighted areas of interest located within collected subject data 114. Search report 116-1 may comprise a search score 136 and ranked search results 134.

Ranked search results 134 may include references to subject data 114 including the full text of keyword string data 128, or portions of keyword string data. Searching module 106 may scan the full text of any subject data that may comprise parsable text. For example, subject data 114 may comprise a simple text file. This simple text file may include the full text of the keyword string data 128 provided to searching module 108. Ranked search results 134 may include references to subject data 114 not comprising any portions of the full text of keyword string data 128. Such ranked search results 134 may still be relevant to the keyword string data 128, but may omit all of the text of the keyword string data 128. For example, a keyword string of "animal" may return search results comprising the string "cat".

In such examples, searching module 108 may comprise a machine learning model, which may be configured to return results from the subject data 114 according to the keyword string data 128 provided. In some examples, the machine learning module may comprise a trained neural network. The neural network may include an input layer, one or more hidden layers, and an output layer, configured to receive one or more data inputs at the input layer. Inputs at the input layer may include inputs as described in Figure 7, including subject data 114, subject data class 120, subject class 122, subject identifier 124, baseline profile 126-2 and keyword string data 128. The neural network may generate an output at the output layer. The output may include a search score 136 and ranked search results 134. In some examples, the neural network may act as a binary classifier, and may assign one of two search scores to the search (e.g. relevant, not relevant). In another example the neural network may comprise three or more possible classes with each class corresponding to the search relevance / search score (e.g. none, low, medium, or high). In some examples, the output layer includes a softmax activation function for representing categorical distribution over class and/or relevance labels. The neural network may be trained using a training dataset including training instances with known threat scores or classifications. The training instances may include one or more data inputs, such as described above. A learning process may be performed using the training dataset such that the trained neural network learns to predict a threat score (classification) for a previously unseen input data.

In some examples, the machine learning model applied by searching module 108 may be configured for continuous learning / continuous training, such that as more training data becomes available to searching module 108, the machine learning model applied searching module 108 may continuously be trained to improve the performance of the model.

In other examples, searching module 108 may employ any searching algorithm known in the art to locate data within subject data 114 associated with keyword string data 128.

Ranked search results 134 may be ranked by various methods. For example, search results of ranked search results 134 may be ranked by proportion of keyword string data 128 included. For example, keyword string data 128 may comprise a first word and a second word. A search result comprising both the first word and the second word may rank higher in the ranked search results 134 relative to a search result comprising only the first word and not the second word.

In other examples, search results of ranked search results 134 may be ranked by threat level. Using historical data, certain search results may be deemed to be of a higher threat than other search results. For example, a search result comprising the term "BitTorrent" or other file sharing related strings may be of a relatively high threat level, as a subject may have used such file sharing systems to exfiltrate valuable data.

In some examples, ranked search results 134 may be ranked such that only combinations of certain results result in high threat level rankings. For example, subject data 114 comprising either example string "A" or example string "B" alone may not result in a search report 116-2 comprising example string "A" or example string "B" labelled as high threat level results, however, subject data 114 comprising both example string "A" and example string "B" may result in a search report 116-2 comprising example string "A" or example string "B" labelled as high threat level results, for a given keyword search string.

Search score 136 may comprise a relative rating of the relevance of the located search results to the provided keyword string data. For example, a search report 116-2, wherein search results 134 are very closely related to keyword string data, the search score 136 may comprise a higher numerical value or relatively category (e.g. "highly relevant", versus "moderately relevant").

Search report 116-2 may be used by an investigator to assist in an investigation. For example, in a typical investigation without the assistance of the systems and methods described herein, an investigator may have to search through large amounts of subject data 114 manually. During a typical investigation with the assistance of the systems and methods described herein, an investigator may assemble system 100 using desired forensic data sources. The investigator, based on previous skill and experience, may provide several keyword strings, as keyword string data, generating multiple search reports 116-2, one corresponding to each provided keyword string. The investigator may review these multiple search reports 116-2, as well as investigation report 116-1 to assist in their investigation.

In some examples of system 100, each generated investigation report 116-1 and/or search report 116-2 may be sent to a client or employer computing device for storage or archival. In some examples, investigation report 116-1 and/or search report 116-2 may be transmitted over network 112.

Referring again to Figures 3, 4 and 5, system 100 may further comprise an investigator terminal 110. The investigator terminal 110 may be a software portal or interface accessible through an electronic device, or a hardware terminal. The investigator terminal 110 may be operated by a human investigator. The investigator terminal 110 may be coupled to the report generation module 106 and searching module 108, either directly (e.g. the investigator terminal 110 may be connected to report generation module 106 without a network intermediary), or through a network 112, such that investigation report 116-1 and search report 116-2 data may be delivered from the report generation module 106 or searching module 116-2, to the investigator terminal 110.

Investigator terminal 110 may be used by the investigator to control, and operate system 100. For example, the investigator may input or select keyword string data using investigator terminal 110, for provision to searching module 106. In other examples, the investigator may interface with terminal 110 to adjust subject data collection parameters of investigation module 106, searching attributes of searching module 108 or other paraments of system 100.

In some examples of system 100, system components may be sub-components of an intelligence gathering platform 238. For example, system 100a comprises an intelligence gathering platform 238a, wherein report generation module 106, searching module 108, investigation module 104a and investigator terminal 110 are all subcomponents of the intelligence gathering platform 238a, which may comprise a single computing device. Similarly, system 100b comprises an intelligence gathering platform 238b, wherein report generation module 106, searching module 108, investigation module 104b and investigator terminal 110 are all subcomponents of the intelligence gathering platform 238b, which may comprise a single computing device and system 100c comprises an intelligence gathering platform 238c, wherein report generation module 106, searching module 108, and investigator terminal 110 are all subcomponents of the intelligence gathering platform 238c, which may comprise a single computing device.

In some examples, only investigation reports 116-1 comprising a threat score 132 above a certain threshold or assigning a certain class/having a certain threat categorization/class may be transmitted to an investigator terminal 110 for display by the investigator terminal 110 to an investigator for further review. Additionally, investigation reports 116-1 comprising a threat score 132 below a certain threshold may be ignored.

In some examples, investigator terminal 110 may be configured to display an electronic representation of investigation report 116-1 and/or search report 116-2 in a user interface displayed on an electronic display. In some cases, the electronic representation may be generated at a first computing device and transmitted to a second networked computing device for display in a user interface. The electronic representation may comprise search score 136 and ranked search results 134 of a search report 116-2, for specific keyword string data 128, and/or investigation flags 130 and threat score 132 of an investigation report 116-1.

In some examples, the electronic representation for a search report 116-2 may list all ranked search results 134. For example, the search report 116-2 may comprise 3 ranked search results 134, result A, result B and result C. The electronic representation may be configured such that all three ranked search results are displayed simultaneously. Additionally, the search score 136 may be visible in the same electronic representation for display in a user interface displayed on an electronic display. In some examples, the historical prevalence of each search result may be displayed in the user interface.

In some examples, the user interface may be configured such that an investigator may individually select each search result of the ranked search results 134. Once a search result is selected, an alternate user interface may be generated and transmitted to an electronic display for display, displaying identical or similar search results from previously conducted investigations, in addition to associated metadata for each search result, including, for example, without limitation, time and date of search, and subject identifier. Such historical data may be drawn from baseline profile 126-2 in some examples, or other investigation archival databases in other examples.

In some examples, the electronic representation for an investigation report 116-1 may list all investigation flags 130. For example, the investigation report 116-1 may comprise 3 investigation flags, flag A, flag B and flag C. The electronic representation may be configured such that all three ranked flags are displayed simultaneously. Additionally, the threat score 132 may be visible in the same electronic representation for display in a user interface displayed on an electronic display. In some examples, the historical prevalence of each investigation flag may be displayed in the user interface.

In some examples, the user interface may be configured such that an investigator may individually select each investigation flag of the investigation flags 130. Once an investigation flag is selected, an alternate user interface may be generated, displaying identical or similar investigation flags from previously conducted investigations, in addition to associated metadata for each investigation flag, including, for example, without limitation, time and date of investigation, and subject identifier. Such historical data may be drawn from baseline profile 126-1 in some examples, or other investigation archival databases in other examples.

In other examples, the user interface may comprise additional investigator selectable features, such as links to subject information, or links to human readable subject data, such as HR record data, for display on an electronic display.

Referring now to Figure 10, in the example embodiment therein, an intelligence gathering system 200 may comprise two forensic data sources, an employee laptop computer 202-1 and an employer HR record server 202-2.

System 200 further comprises a network 206, investigation modules 204a, report generation module 206, searching module 208, and investigator terminal 210. Components of system 200 may be analogous to components of system 100, with reference characters incremented by 100. Description above in reference to system 100 may apply to system 200.

The system 200 of Figure 10 may be assembled by an investigator specifically to conduct an investigation. For example, a certain employee may have recently left an organization. The investigator, on behalf of the organization, may conduct an investigation of the employee's devices, which may include forensic data sources 202 (such as laptop computer 202-1 of system 200).

The investigator may couple forensic data sources 202 to investigation module 204a. Investigation module 204a may be coupled to report generation module 206, searching module 208 and investigator terminal 210. The investigator may manipulate interface devices of investigator terminal 210 to control and operate system 200. Once components are appropriately coupled, for example, as pictured in Figure 10, the investigator may activate the intelligence gathering process.

In the example embodiment of system 200, the laptop computer 202-1 was the primary productivity device of the subject. The subject was previously employed by an entity who is administering the system 200. The subject used laptop computer 202-1, including installed software, to conduct regular employment activities. Routinely, the subject may utilize laptop computer 202-1 to draft and review Microsoft Word documents, draft and review Microsoft Excel spreadsheets, draft and review email communications, use an instant messenger application to communicate with team members, log and track activities using an electronic calendar application, participate in videoconferences, download and view PDF format documents, view images, and browse the world wide web. Data associated with these activities may be stored on storage media of laptop computer 202-1.

The subject belongs to a subject class 122, which corresponds to a mid-level administrative employee classification in the example of system 200. Subject class 122 comprises information that may be used to determine the expected regular activities of the employee.

Previously, subject data from all subjects of a given subject class may have been collected for a fixed period of time, or continuously, using an intelligence gathering or insider threat prediction system. Baseline profiles 126-1, 126-2 may have been built for the subjects of this subject class 122 according to this collected subject data.

In examples where the expected regular activities are not known, the subject data 114 may be evaluated against this collected baseline profile 126. For example, it may be determined that the subject regularly visits job searching websites. Browser history comprising job searching websites may be deemed to be within the expected regular activities of a subject of the subject class. In such an example, visiting a job searching website may not give rise to an elevated threat score on a subject's investigation report 116-1, and may comprise the subject matter of an investigation flag 130.

In operation of system 200, investigation module 204a scans the storage media of laptop computer 202-1 and collects subject data 114. Subject data 114 is collected more widely than the expected activities of the subject, as defined by the subject class.

For example, the subject may not be expected to routinely copy large amounts of data (e.g. data copy operations larger than 2GB) during their employment activities. Investigation module 204a may be configured to collect subject data 114 according to the subject class 122, wherein unexpected activities are examined. In other examples, wherein a subject is expected to routinely copy large amounts of data during their employment activities, such activities may not be monitored, and therefore, investigation module 204a may not collect associated subject data.

Additionally, in operation of system 200, investigation module 204a scans HR records server 202-2, and collects subject data 114. Subject data 114 that may be collected from HR records server 202-2 may include performance reports, time off requests, records of absence, discipline reports, and complaint records.

After collection, subject data 114 may be provided to report generation module 206 as an input, along with associated subject data class 120, subject class 122, baseline profile 126-1 and subject identifier 124, similar to as shown in Figure 7 for system 100. The investigation module 206 may output an investigation report 116-1 corresponding to the provided inputs.

Additionally, after collection, subject data 114 may be provided to searching module 208 as an input, along with associated subject data class 120, subject class 122, baseline profile 126-2 and subject identifier 124, similar to as shown in Figure 8 for system 100. The searching module 208 may output a search report 116-2 corresponding to the provided inputs.

The investigation report 116-1 may comprise a calculated, comprehensive threat score 126, as well as investigation flags 128. Each search report 116-2 may comprise ranked search results 134, as well as a search score 136. The contents of reports 116-1, 116-2 may be passed to investigator terminal 210. The investigator terminal 210 may generate a graphical user interface for the display of the contents of report 116-1, 116-2. A human investigator may review the contents of the reports 116-1, 116-2, and determine the next course of action.

For example, the investigator may not be satisfied with the contents of the generated search reports 116-2. The investigator may provide a new keyword string to the searching module 208, through the investigation terminal 210, and direct searching module 208 to generate a new search report 116-2 corresponding to the new keyword search string.

Similarly, the investigator may not be satisfied with the contents of the generated investigation report 116-1. The investigator may adjust the parameters of report generation module 206, and direct report generation module 206 to generate a new investigation report 116-1 using different paraments.

Once the investigator is nominally satisfied with the contents of all generated reports 116-1, 116-2, the investigator may commence non-assisted portions of the investigation. Periodically, the investigator may determine that further searches may need to be run during the investigation. The investigator may once again provide a new keyword string to the searching module 208, through the investigation terminal 210, and direct searching module 208 to generate a new search report 116-2 corresponding to the new keyword search string

In some examples, investigator terminal may comprise an interface for searching through collected subject data 114 in full. In such examples, once system 200 is assembled by the investigator, the investigator may conduct the investigation entirely by interacting with investigator terminal, as intelligence gathering methods and manual review methods may both be conducted by this single terminal.

After the completion of the investigation, the investigator may determine an appropriate course of action based on the intelligence gathered during the investigation. Such courses of action may comprise no further action, safeguarding related data, initiating legal proceedings, or contacting law enforcement personnel.

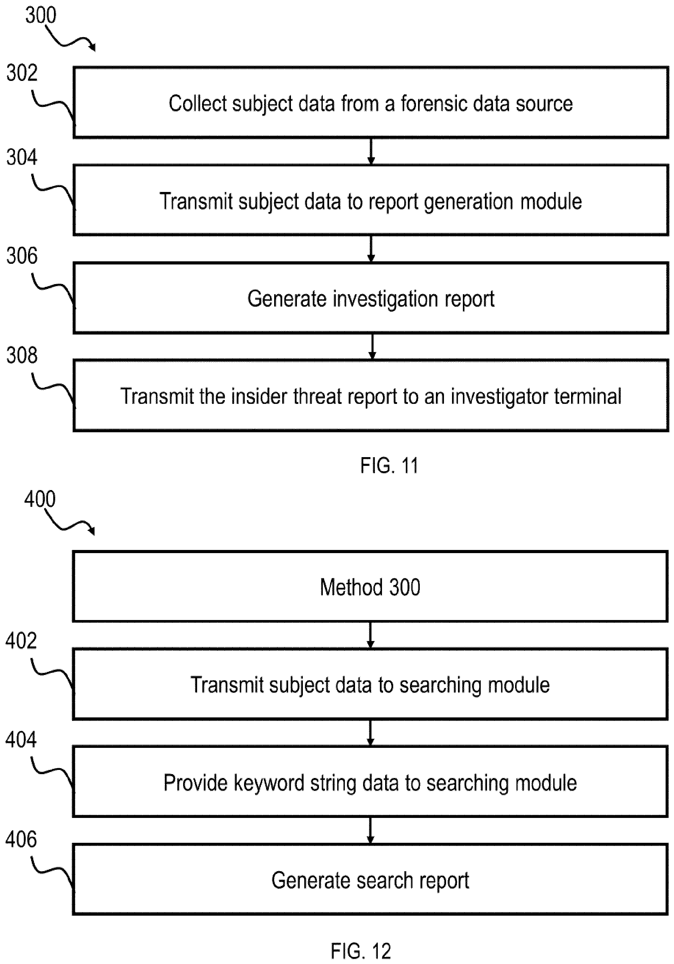

Referring now to Figure 11, pictured therein is a flowchart depicting a computer-implemented method 300 of intelligence gathering, according to an embodiment. Method 300 comprises steps 302, 304, 306 and step 308. Description above in reference to systems 10, 100 and 200 above may apply to method 300

At step 302, subject data is collected from a forensic data source. At step 304, subject data is transmitted to a report generation module. At step 306, an investigation report is generated via the report generation module. At step 308, the investigation report is transmitted to an investigator terminal. The investigation report, or a subset of the data therein, may be presented to the user in a user interface executing at the investigator terminal.

Referring now to Figure 12, pictured therein is a flowchart depicting a computer-implemented method 400 of intelligence gathering, according to an embodiment. Method 400 comprises any or all steps of method 300, and steps 402, 404 and 406. Description above in reference to systems 10, 100 and 200 above may apply to method 400.

At step 402, subject data is transmitted to a searching module. At step 404, keyword string data is provided to the searching module. At step 406, a search report is generated via the searching module.

While the above description provides examples of one or more apparatus, methods, or systems, it will be appreciated that other apparatus, methods, or systems may be within the scope of the claims as interpreted by one of skill in the art.

## Claims

1. An electronic intelligence gathering system for identifying suspicious subject data comprising:
a processor;
a forensic data source comprising a data storage device, coupled to the processor, the data storage device storing subject data of a subject, the subject data being data characterizing a behaviour of the subject;
a memory coupled to the processor, the memory storing an investigation module and a report generation module, each configured to be executed by the processor;
the investigation module configured to:
collect the subject data of the subject from the data storage device of the forensic data source,; and
transmit the collected subject data to the report generation module;
and wherein the report generation module is configured to:
receive the subject data from the investigation module; and
analyze the subject data to generate a digital investigation report output.

2. The system of claim 1, wherein the digital investigation report output comprises investigation flag data, which investigation flag data can comprise at least one of: file path data, browser history entries, or employee calendar entries.

3. The system of claim 1, the memory further comprising a searching module configured to be executed by the processor, wherein the searching module is configured to receive a keyword string data as input from an investigator terminal, and the subject data from the investigation module, and output a search report.

4. The system of claim 3, wherein the searching module applies a machine learning model, and wherein the machine learning model receives the keyword string data and the subject data as an input, and outputs search report data to the searching module.

5. The system of any one of claims 1 to 4, wherein the subject comprises a subject class, and the report generation module analyzes the subject data according to the subject class.

6. The system of claim 4, wherein the machine learning model comprises a neural network.

7. The system of any one of claims 1 to 6, wherein the forensic data source is an employee computer and/or an employee mobile device.

8. An electronic intelligence gathering method for identifying suspicious subject data, comprising:
collecting subject data of a subject from a data storage device of a forensic data source, wherein the subject data characterizes a behavior of the subject;
providing the subject data to a report generation module stored on a memory; and
executing the report generation module on a processor to generate a digital investigation report output comprising investigation flags identifying suspicious subject data.

9. The method of claim 8, wherein the subject comprises a subject class and analyzing the subject data comprises inputting the subject data and the subject class into a machine learning model.

10. The method of claims 8 or 9, further comprising:
providing a keyword search string to a searching module as an input, the searching module stored in the memory and configured to be executed by the processor;
providing the collected subject data to the searching module as an input; and
executing the searching module on the processor to generate a search report using the searching module.

11. The method of claim 8, wherein the investigation report output comprises investigation flag data, which investigation flag data can comprise at least one of: file path data, browser history entries, or employee calendar entries.

12. The method of claim 10, wherein the searching module applies a machine learning model and wherein the machine learning model receives the keyword string data and the subject data as an input, and outputs search report data to the searching module.

13. The method of claim 8, wherein the subject comprises a subject class, and the report generation module analyzes the subject data according to the subject class.

14. The method of any one of claims 8 to 13, wherein the forensic data source is an employee computer and/or an employee mobile device.

15. The method of claim 13, wherein the machine learning model comprises a neural network.
